# EUROPÄISCHE PATENTSCHRIFT

(11) **EP 0 878 647 B1**
(45) Veröffentlichungstag und Bekanntmachung des Hinweises auf die Patenterteilung: **24.09.2003**
(21) Anmeldenummer: 98102406.0
(22) Anmeldetag: 12.02.1998
(51) Int. Cl.: F16J 9/26

(54) **Kolbenring aus Gusseisen**
Piston ring made of cast iron
Segment de piston en fonte

(30) Priorität: 17.05.1997 DE 19720779
(43) Veröffentlichungstag der Anmeldung: 18.11.1998
(73) Patentinhaber: Federal-Mogul Burscheid GmbH, 51399 Burscheid (DE)
(72) Erfinder: Michel, Hans-Albert, Dipl.-Ing., 51379 Leverkusen (DE); Linde, Rudolf, 42929 Wermelskirchen (DE)

(56) Entgegenhaltungen:
- EP-A- 0 605 223
- DE-A- 3 506 746
- DE-A- 3 812 656
- DE-B- 1 084 094

## Beschreibung

Die Erfindung betrifft einen Kolbenring aus Gußeisen für einen Kolben einer Brennkraftmaschine mit einer nitrierten Schicht auf der gesamten Umfangsfläche, wobei sich die nitrierte Schicht aus einer Diffusionsschicht und einer über dieser liegenden Verbindungsschicht zusammensetzt.

Als Verschleißschutzschichten von Kolbenringoberflächen, insbesondere der Lauffläche, sind galvanisch abgeschiedene Hartchromschichten oder flammgespritzte Molybdänschichten im Serieneinsatz von Brennkraftmaschinen. Durch Leistungssteigerungen der Motoren kommen diese Schichten vereinzelt an die Grenze ihrer Einsatzmöglichkeiten, hinsichtlich des Verschleiß-, Korrosions- und Dauerschwingfestigkeitsverhaltens. Um das Verschleißverhalten zu verbessern, wurden Kolbenringe thermochemischen Behandlungsverfahren ausgesetzt. Zu diesen Verfahren gehört das Nitrieren. Die zu nitrierenden Bauteile werden z. B. bei Temperaturen zwischen 450° - 600° C in einem Gas erhitzt, wobei die Temperatur mehrere Stunden gehalten wird. In die Oberfläche eindiffundierter Stickstoff bildet eine Verbindungsschicht, die aus einer Nitridschicht besteht und einer Diffusionsschicht, in welcher der Stickstoffgehalt kontinuierlich bis auf einen Restgehalt abfällt.
Der Verlauf des Stickstoffgehaltes über den Querschnitt entspricht dem Verlauf der Härte.
Da die Verbindungszone anhand der hohen Härte sehr spröde ist und zum Abplatzen neigt, wurden bereits Maßnahmen offenbart, die darauf abzielen, die Verbindungszone zu entfernen. Die DE 3506746 C2 offenbart einen gattungsgemäßen Kolbenring aus Gußeisen oder Stahl, bei dem die Verbindungsschicht entfernt wurde, um dann auf der Diffusionsschicht eine andere Schicht aufzuspritzen oder aufzuplattieren.
Da das Entfernen der Verbindungsschicht ein zusätzlicher Arbeitsgang in der Fertigungslinie der Kolbenringherstellung ist, sind die Herstellungskosten insgesamt relativ hoch.

Der Erfindung liegt die Aufgabe zugrunde, einen verschleißarmen Kolbenring zu schaffen, der im Hinblick auf die Herstellungskosten besonders vorteilhaft ist.

Diese Aufgabe wird erfindungsgemäß durch die kennzeichnenden Merkmale des Patentanspruchs 1 gelöst. Vorteilhafte Ausgestaltungen der Erfindung sind in den Unteransprüchen dokumentiert.

Bei nitrierten Gußeisenringen mit weicher Metallschicht hat sich gezeigt, daß die spröde Verbundschicht nicht von der Diffusionsschicht abplatzt, so daß auf die bisher notwendige nachfolgende mechanische Bearbeitung des nitrierten Kolbenringes ganz verzichtet werden kann. Hierdurch wird es nicht nur möglich auf den Arbeitsgang _{"}Entfernen der Verbindungsschicht" zu verzichten, sondern der Kolbenring erfährt auch keine, durch mechanische Bearbeitung hervorgerufene Maßveränderung, welche sich bisweilen negativ auf das Funktionsverhalten des Kolbenringes auswirkte. Die relativ weichen, aufgalvanisierten Metallschichten sind ausreichend fest mit der Verbindungsschicht verbindbar. Durch die extrem dünnen Schichten wird während des Motorbetriebes bereits nach wenigen Betriebsstunden eine optimale Kontaktfläche auf der Kolbenringlauffläche erzeugt. Die weichen Schichten werden bei Betrieb des Motors bis auf die Verbindungsschicht abgetragen, dabei entsteht eine linienförmige Kontaktfläche. Diese Kontaktfläche stellt sich ohne die weiche Metallschicht erst nach ca. 100 - 200 Betriebsstunden ein.

Mit dem erfindungsgemäßen Kolbenring wird somit nicht nur das Herstellungsverfahren billiger, sondern es wird gleichzeitig ein Kolbenring mit verbesserten Einlaufeigenschaften geschaffen.

Die Erfindung ist anhand eines Ausführungsbeispieles in der Zeichnung dargestellt und wird im folgenden näher erläutert. Es zeigen:
- Fig. 1: Querschnitt eines erfindungsgemäßen Kolbenringes
- Fig. 2: Kolbenring gem. Fig. 1 mit Laufpartner (Zylinder)

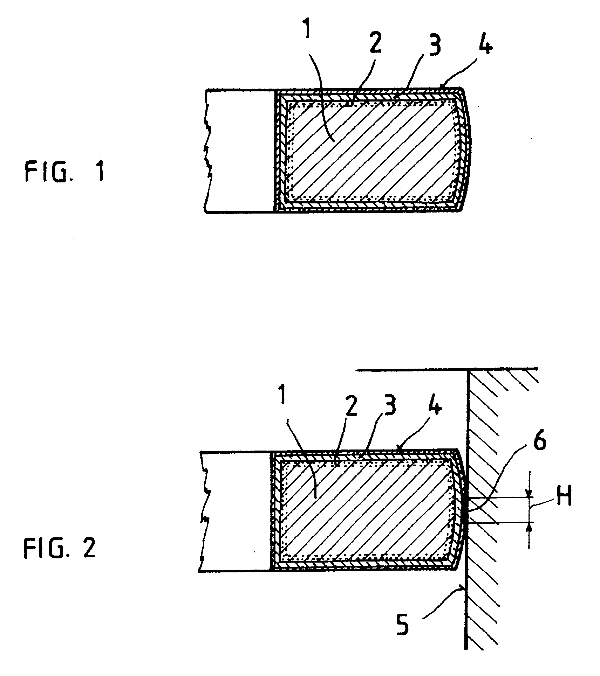

Der in der Figur 1 dargestellte Kolbenring (1) besteht aus Gußeisen. Auf der gesamten Umfangsfläche bzw. Oberfläche ist der Kolbenring (1) mit einer nitrierten Schicht versehen. Diese Schicht setzt sich aus einer Diffusionsschicht (2) und einer Verbindungsschicht (3) zusammen. Die Verbindungsschicht (3) weist eine Dicke von ca. 15 µm auf und ist äußerst hart und spröde. Auf diese Verbindungsschicht (3) ist eine sehr dünne Schicht (4) aus einem Nichteisenmetall in einer Dicke < 5 µm aufgalvanisiert. Das Metall (4) kann aus Zinn, Kupfer, Blei oder einer Kupferlegierung bestehen. Als Gußeisen eignet sich insbesondere ein Material mit perlitischer Grundstruktur und kugelförmigen oder vermikularförmigen Graphitausscheidungen. Derartige Legierungen eignen sich insbesondere für hohe Temperaturbelastungen.

Die Figur 2 zeigt den Kolbenring (1) in Kontakt mit der Zylinderlauffläche (5). Durch das relativ weiche Metall (4) tritt schon nach wenigen Betriebsstunden ein Verschleiß dieser Schicht auf, so daß sich eine etwa linienförmige Kontaktfläche (6) geringer axialer Höhe (H) einstellt.

## Patentansprüche

1. Kolbenring (1) aus Gußeisen für einen Kolben einer Brennkraftmaschine mit einer nitrierten Schicht auf der gesamten Umfangsfläche, wobei sich die nitrierte Schicht aus einer Diffüsionsschicht (2) fund einer über dieser liegenden Verbindungsschicht (3) zusammensetzt, **dadurch gekennzeichnet, daß** auf die Verbindungsschicht (3) ein Metall (4) mit geringerer Härte als die Härte der Verbindungsschicht (3) mit einer Schichtdicke kleiner 5 µm aufgalvanisiert ist.

2. Kolbenring nach Anspruch 1, **dadurch gekennzeichnet, daß** das Gußeisen eine perlitische Grundstruktur mit kugelförmigen oder vermikularförmigen Graphitausscheidungen besitzt und aus
| | | |
|---|---|---|
| 2,5 - 4,0 | Gewichtsprozent | Kohlenstoff |
| 1,5 - 4,0 | Gewichtsprozent | Silizium |
| 0,2 - 2,0 | Gewichtsprozent | Mangan |
| max. 0,35 | Gewichtsprozent | Phosphor |
| max. 0,03 | Gewichtsprozent | Schwefel |
| max. 3,0 | Gewichtsprozent | Chrom |
| max. 1,5 | Gewichtsprozent | Vanadium |
| max. 2,5 | Gewichtsprozent | Molybdän |
| max. 0,2 | Gewichtsprozent | Nickel |
| 1,0 - 3,5 | Gewichtsprozent | Kupfer |
| 0,02 - 2,5 | Gewichtsprozent | Aluminium |
| 0,005 - 0,04 | Gewichtsprozent | Magnesium |
sowie Eisen als Rest besteht.

3. Kolbenring nach Anspruch 1 und 2, **dadurch gekennzeichnet, daß** die Schichtdicke der Verbindungsschicht (3) im Bereich von 10 bis 20 µm liegt.

4. Kolbenring nach den Ansprüchen 1 bis 3, **dadurch gekennzeichnet, daß** das Metall (4) geringerer Härte ein Nichteisenmetall ist.

5. Kolbenring nach den Ansprüchen 1 bis 4, **dadurch gekennzeichnet, daß** das Metall (4) geringerer Härte Zinn ist.

6. Kolbenring nach den Ansprüchen 1 bis 4, **dadurch gekennzeichnet, daß** das Metall (4) geringerer Härte ein Buntmetall ist.

## Claims

1. Cast-iron piston ring (1) for a piston of an internal combustion engine, said ring having a nitrided layer over the entire circumferential surface, and the nitrided layer comprising a diffusion layer (2) and a connection layer (3) lying above same, **characterised in that** a metal (4) of a lesser hardness than the hardness of the connection layer (3) is electrodeposited onto the connection layer (3) in a layer thickness which is smaller than 5 mm.

2. Piston ring according to claim 1, **characterised in that** the cast iron has a pearlitic basic structure with spherical or vermicular graphite sediments, and comprises:
| | | |
|---|---|---|
| 2.5-4.0 | % by weight | carbon |
| 1.5-4.0 | % by weight | silicon |
| 0.2-2.0 | % by weight | manganese |
| max. 0.35 | % by weight | phosphorous |
| max. 0.03 | % by weight | sulphur |
| max. 3.0 | % by weight | chromium |
| max. 1.5 | % by weight | vanadium |
| max. 2.5 | % by weight | molybdenum |
| max. 0.2 | % by weight | nickel |
| 1.0-3.5 | % by weight | copper |
| 0.02-2.5 | % by weight | aluminium |
| 0.005-0.04 | % by weight | magnesium |
and iron as the remainder.

3. Piston ring according to claim 1 and 2, **characterised in that** the layer thickness of the connection layer (3) is in the range between 10 and 20 mm.

4. Piston ring according to claims 1 to 4, **characterised in that** the metal (4) of lesser hardness is a non-ferrous metal.

5. Piston ring according to claims 1 to 4, **characterised in that** the metal (4) of lesser hardness is tin.

6. Piston ring according to claim 1 to 4, **characterised in that** the metal (4) of lesser hardness is a non-ferrous heavy metal.

## Revendications

1. Segment de piston (1) en fonte de fer pour un piston d'un moteur à combustion interne comprenant une couche nitrurée sur la totalité de la surface périphérique, la couche nitrurée étant composée d'une couche de diffusion (2) et d'une couche de liaison (3) située sur la couche de diffusion, **caractérisé en ce qu'**un métal (4) est galvanisé sur la couche de liaison (3), ledit métal présentant une dureté inférieure à la dureté de la couche de liaison (3) et une épaisseur de couche inférieure à 5 micromètres.

2. Segment de piston selon la revendication 1, **caractérisé en ce que** la fonte de fer présente une structure de base perlitique avec des découpes de graphites sphériques ou vermiculaires et comprend :
| | | |
|---|---|---|
| 2,5 - 4,0 | % en poids | carbone |
| 1,5 - 4,0 | % en poids | silicium |
| 0,2 - 2,0 | % en poids | manganèse |
| max. 0,35 | % en poids | phosphore |
| max. 0,03 | % en poids | soufre |
| max. 3,0 | % en poids | chrome |
| max. 1,5 | % en poids | vanadium |
| max. 2,5 | % en poids | molybdène |
| max. 0,2 | % en poids | nickel |
| 1,0 - 3,5 | % en poids | cuivre |
| 0,02 - 2,5 | % en poids | aluminium |
| 0,005 - 0,04 | % en poids | magnésium |
et le reste de fer

3. Segment de piston selon la revendication 1 ou 2, **caractérisé en ce que** l'épaisseur de couche de la couche de liaison (3) est de l'ordre de 10 à 20 micromètres.

4. Segment de piston selon l'une quelconque des revendications 1 à 3, **caractérisé en ce que** le métal (4) de dureté inférieure est un métal non ferreux.

5. Segment de piston selon l'une quelconque des revendications 1 à 4, **caractérisé en ce que** le métal (4) de dureté inférieure est de l'étain.

6. Segment de piston selon l'une quelconque des revendications 1 à 4, **caractérisé en ce que** le métal (4) de dureté inférieure est un métal lourd non ferreux.
